# EUROPÄISCHE PATENTSCHRIFT

(11) **EP 0 771 165 B1**
(45) Veröffentlichungstag und Bekanntmachung des Hinweises auf die Patenterteilung: **16.09.1998**
(21) Anmeldenummer: 95941082.0
(22) Anmeldetag: 08.12.1995
(51) Int. Cl.: A47J 37/04, A47J 37/12

(54) **KORB FÜR EINEN HEISSLUFTOFEN FÜR DIE ZUBEREITUNG VON LEBENSMITTELN**
BASKET FOR USE IN A HOT-AIR OVEN FOR COOKING FOOD
PANIER UTILISE DANS UN FOUR A AIR CHAUD POUR LA PREPARATION D'ALIMENTS

(30) Priorität: 19.05.1995 DE 19518181
(43) Veröffentlichungstag der Anmeldung: 07.05.1997
(73) Patentinhaber: UBERT GASTROTECHNIK GMBH, 46348 Raesfeld (DE)
(72) Erfinder: UBERT, Harald, 46348 Raesfeld (DE); HELLER, Helmut, 46414 Rhede (DE)
(74) Vertreter: Lenzing, Andreas
(86) Internationale Anmeldenummer: EP9504845
(87) Internationale Veröffentlichungsnummer: WO9636264

(56) Entgegenhaltungen:
- WO-A-93/18349
- DE-A- 2 657 744
- FR-A- 2 452 906
- US-A- 4 155 294
- US-A- 5 134 927
- US-A- 5 193 444

## Beschreibung

Die vorliegende Erfindung betrifft einen Heißluftofen für die Zubereitung von Lebensmitteln mit den Merkmalen des Oberbegriffs des Anspruchs 1.

Derartige Heißluftöfen sind bekannt, beispielsweise aus der US-A-5193444. Heißluftöfen werden in steigendem Maße zur Zubereitung von tiefgekühlten Lebensmitteln, wie z. b. Pommes Frites eingesetzt, weil die herkömmliche Zubereitung in einer Friteuse durch den hohen Fettgehalt des zubereiteten Lebensmittels zunehmend auf Ablehnung stößt. Die Zubereitung in einem Heißluftstrom ist demgegenüber vorteilhaft, was den Fettgehalt des fertigen Lebensmittels betrifft, es stellt sich aber auch ein geschmacklich besseres Ergebnis ein.

Bei den bekannten Heißluftöfen (vgl. zum Beispiel US-A-4155294) wird für die Aufnahme des Lebensmittels in dem Garraum ein Korb eingesetzt, der aus einem Edelstahldrahtgewebe gefertigt ist, das in einen Rahmen aus Winkelprofilen so eingeschweißt ist, daß sich ein quaderförmiger Korb mit quadratischem Querschnitt in Richtung der Drehachse ergibt, der einseitig offen ist. Dieser Korb ist zum Befüllen aus dem Heißluftofen entnehmbar, kann dann von seiner offenen Seite her mit dem zuzubereitenden Lebensmittel beschickt werden und wieder in den Ofen eingeführt werden, wobei ein Decksieb die offene Oberseite des Korbes so verschließt, daß das Lebensmittel bei der Rotation des Korbes um seine Drehachse nicht herausgelangen kann. Diese Drahtkörbe haben gravierende Nachteile. So ist die Reinigung eines solchen Korbes sehr schwierig, da sich Lebensmittelreste und andere Verkrustungen zwischen den in einem Kreuzungspunkt jeweils aufeinanderliegenden Drähten des Drahtgewebes ablagern können und von dort nur schwer zu beseitigen sind. Außerdem setzen sich Verschmutzungen vorzugsweise in den Ecken des quaderförmigen Korbes fest, weil dort das Drahtgewebe in das Winkelprofil eingeschweißt wird und sich eine sehr schwer zu reinigende Anordnung ergibt. Diese Problematik führt dazu, daß die aus hygienischer Sicht erforderliche Reinigung des Korbes vernachlässigt wird.

Ein weiteres Problem bei Heißluftöfen ist die Zubereitungszeit. Insbesondere bei Schnellimbissen ist eine besonders schnelle Zubereitung der Lebensmittel angestrebt. Hierfür ist es erforderlich, daß die Heißluft im Innenraum des Heißluftofens den Korb gut durchströmen kann, um das Lebensmittel wirkungsvoll zu garen und zu rösten. Die Durchströmung findet etwa in radialer Richtung des Korbes statt, so daß der offene Querschnitt des verwendeten Drahtsiebes oder Drahtgitters zu beachten ist. Da die Anströmung nicht immer senkrecht auf das Drahtgitter erfolgt, sondern infolge der Rotation des Korbes auch zeitweise unter einem gewissen Winkel, ist der freie Querschnitt auch unter diesem Winkel von beispielsweise 45° zu betrachten. Dabei stellt man fest, daß der freie Querschnitt eines Drahtsiebes bei einer Abweichung von der Senkrechten sich relativ schnell verringert.

Schließlich ist in der US-A-5,193,444 ein Heißluftofen für die Zubereitung von Lebensmitteln mit einem Gehäuse, mit einem von Seitenwänden sowie einer Bodenwand und einer Deckenwand begrenzten Garraum, mit einem Gebläse für die Erzeugung eines Heißluftstroms in dem Garraum, mit einem in den Garraum einführbaren drehbaren und runden Korb für Lebensmittel, wobei der Korb um eine Drehachse drehbar ist und im Betrieb vom Heißluftstrom durchsetzt wird und wobei der Korb eine aus Blech gefertigte und mit Öffnungen versehene Wandung aufweist. Dieser Heißluftofen ist für das Erhitzen, Kochen und Rösten von körnigen Lebensmitteln, wie z. B. Kaffeebohnen, Nüssen und Getreide vorgesehen. Bei diesem Heißluftofen ist aufgrund der runden Querschnittsgestalt des Korbes keine effektive Umwälzung des Lebensmittels gegeben, wie sie beispielsweise bei der Zubereitung von Pommes Frites oder dergleichen erforderlich ist.

Es ist deshalb Aufgabe der vorliegenden Erfindung, einen Heißluftofen für die Zubereitung von Lebensmitteln zu schaffen, bei dem der Korb besser zu reinigen ist, die Durchströmung des Korbes effektiver möglich wird und eine wirksame und schonende Umwälzung der Lebensmittel gewährleistet ist.

Diese Aufgabe wird von einem Heißluftofen mit den Merkmalen des Anspruchs 1 gelöst.

Weil der Korb in einem Querschnitt senkrecht zu der Drehachse im wesentlichen quadratisch geformt ist und die Eckbereiche der Wandung abgeflacht oder abgerundet sind und die abgeflachten oder abgerundeten Eckbereiche Führungsbereiche für eine Korbführung aufweisen, die nicht von Öffnungen durchsetzt sind, ist der Korb auch in den Führungsbereichen besonders gut zu reinigen. In den Eckbereichen erfolgt außerdem eine wirksame Umwälzung des zuzubereitenden Lebensmittels, ohne daß jedoch empfindliche Lebensmittel wie die im Verlaufe des Garprozesses zeitweise sehr brüchigen Pommes Frites beschädigt werden.

Weitere Vorteile ergeben sich bei den Konstruktionsmerkmalen der Unteransprüche. Insbesondere ist es vorteilhaft, wenn die Öffnungen länglich ausgebildet sind, wobei die länglichen Öffnungen vorzugsweise in Umfangsrichtung ausgerichtet sind, weil dann auch unter Anströmungswinkeln, die stark von der senkrechten abweichen, noch eine (in der Projektion) gute offene Siebfläche vorhanden ist.

Besonders einfach herzustellen ist der Korb, wenn die Wandung entlang des Umfangs aus einem einstückigen Blechteil gefertigt wird und die in die Wandung einzubringenden Öffnungen von der späteren Korbinnenseite herausgestanzt sind.

In der Praxis ist es von Vorteil, wenn der Korb auf seiner Innenseite mit einer Beschichtung versehen ist, die Anhaftungen vermeidet und deshalb besonders leicht zu reinigen ist. Eine solche Beschichtung kann beispielsweise PTFE enthalten. Hierbei sind Beschichtungsverfahren bevorzugt, bei denen die Beschichtung besonders fest am Grundmaterial des Korbes anhaftet.

Im folgenden wird ein bevorzugtes Ausführungsbeispiel des erfindungsgemäßen Korbes anhand einer Zeichnung dargestellt.

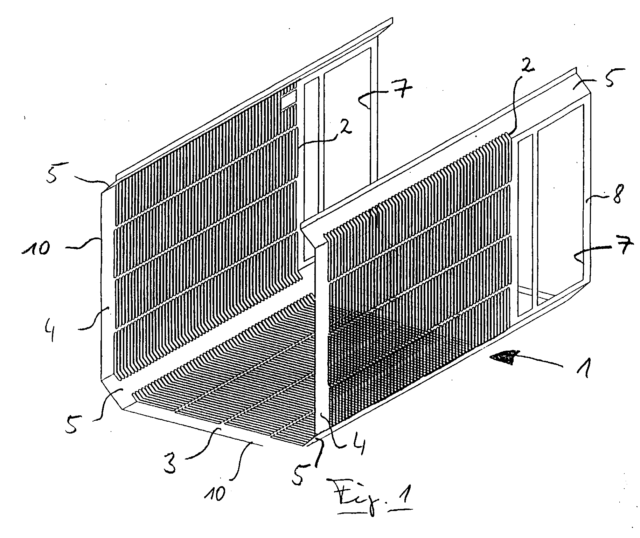

Die Figur zeigt einen Blechmantel 1, der aus einem anfangs glatten Blech gefertigt ist. Der Mantel weist eine große Anzahl länglicher Öffnungen 2 auf, die gerade Langseiten haben, an ihren Schmalseiten verrundet sind und insgesamt ein großes Verhältnis zwischen Länge und Breite aufweisen. Es ergeben sich also Öffnungen von etwa 4 mm Breite und 50 mm Länge, die mit ihrer Langseite in Umfangsrichtung des Korbes ausgerichtet sind. Das nach dem Stanzen zunächst flachliegende Bauteil wird in Querrichtung der Öffnungen um jeweils 45° derart abgekantet, daß sich ein quaderförmiger Korbmantel ergibt, der einen im wesentlichen quadratischen inneren Querschnitt aufweist und eine Länge, die den Querschnitt des Korbes deutlich übersteigt. Dabei bildet der Mantel eine Bodenwandung 3 und zwei parallele, an die Bodenwandung 3 anschließende Seitenwände 4. Die Wandungen 3 und 4 stehen jeweils senkrecht zueinander, wobei der Übergangsbereich zwischen den Wandungen 3 und 4 eine im Winkel von 135° zu beiden Wandungen stehende Führungsfläche 5 ergibt. Bei dieser Geometrie ist es möglich, das Blech zur Fertigung der Wandung 1 in den Kanten jeweils nur um 45° abzukanten, was die Herstellung vereinfacht, die Innenseite des Korbes nicht zu eckig werden läßt, als daß eine Reinigung beeinträchtigt würde, und außerdem die Umwälzung des Lebensmittels im Betrieb einerseits gefördert und das Lebensmittel andererseits nicht beschädigt wird.

Die Führungsflächen 5 weisen einen parallel zu der späteren Drehachse des Korbes verlaufenden, von Öffnungen freigehaltenen Bereich auf, in dem die Führung für den Korb angreifen kann. Der Korb wird zum Beschicken und Entleeren in an sich bekannter Weise aus dem Heißluftofen herausgezogen und wieder hineingeschoben, so daß diese achsparallelen Führungen den Korb bei dem Verschieben stützen müssen.

Im hinteren Bereich der Wandung sind in jeder Seitenwand 4 und in der Bodenwand 3 des Korbes rechteckige Öffnungen 7 vorgesehen, die in achsparalleler Richtung des Korbes etwa 1/3 der Tiefe der Wandung 1 bedecken, während sie in der Höhe nahezu den gesamten Bereich zwischen den Führungsflächen 5 freigeben. Lediglich ein rahmenartiger Steg 8 am hinteren Ende der Wandungen 3 und 4 bleibt stehen.

Zur endgültigen Fertigung des Korbes wird ein nicht näher dargestellter stirnseitiger Abschluß auf die Wandungen 3 und 4 aufgebracht. Hierzu werden die Wendungen 3 und 4 im Bereich ihrer Stirnseiten 10 mit einem Abschlußblech verschweißt, so daß der Korb in dieser Richtung verschlossen ist. Gegenüber den Stirnkanten 10 wird ein entsprechendes Abschlußblech zwischen die Wandungen 3 und 4 derart eingesetzt, daß der mit Langlöchern versehene Bereich der Wendungen zwischen den beiden Abschlußblechen angeordnet ist. Das Abschlußblech an der hinteren Seite bildet für den mit Langlöchern versehenen Bereich eine parallel zu der Vorderseite stehende Rückwand, die den mit Langlöchern durchsetzten Bereich von dem mit den großen, rechteckigen Ausschnitten durchsetzten Bereich trennt.

Bei der späteren Verwendung des Korbes wird das Lebensmittel in den Bereich, der mit Langlöchern versehenen ist, eingesetzt, der Korb wird in einen in dem Heißluftofen vorgesehenen Korbhalter eingeschoben und vor diesem mit einer den Wandungen 3 bzw. 4 entsprechend gestalteten Deckelwand an seiner Oberseite abgedeckt. Sodann wird der Korb durch seine Wandungen 3 und 4 sowie durch den Deckel des Korbhalters hindurch von Heißluft durchströmt. Das Heißluftgebläse sitzt in der Nähe des Korbes in Axialrichtung hinter dem hinteren Abschlußblech, so daß die Zuluft und die Abluft des Heißluftgebläses durch die großen, rechteckigen Öffnungen im hinteren Bereich der Wandung strömen kann. Die Wandung sollte jedoch bis in den Bereich des Gebläses nach hinten gezogen sein, auch wenn hier kein Lebensmittel gegart wird, weil dieser Bereich für die Abstützung des Korbes bei herausgezogenem Korb zum Befüllen und Entleeren eine wichtige Abstützfunktion übernimmt.

Der insoweit beschriebene Korb für einen Heißluftofen ist von der Innenseite her sehr glattflächig, kann durch einfaches Auswischen gereinigt werden und bietet einen großen freien Querschnitt für durchströmende Heißluft auch unter Winkeln, die bei den herkömmlichen Drahtkörben keine Durchströmung mehr erlaubten.

Die Geometrie der Langlöcher soll so gewählt werden, daß die zum Einsatz kommenden Lebensmittel, beispielsweise Pommes Frites verschiedenen Querschnitts, nicht durch die Löcher nach außen gelangen können. Als Größenordnung werden derzeit etwa 3 mm mal 40 mm bis 5 mm mal 60 mm bevorzugt. Besonders gute Ergebnisse lassen sich mit Öffnungen von 3,5 mm mal 42 mm erzielen.

In der Praxis zeigt sich, daß ein derart gefertigter Korb eine besonders geringe Abrasion an dem zuzubereitenden Lebensmittel bewirkt. Entsprechend wenig Kleinpartikel gelangen in den Heißluftstrom und können dort verbrennen, was bislang zu unerwünschten Geschmacksbeeinträchtigungen führte.

## Patentansprüche

1. Heißluftofen für die Zubereitung von Lebensmitteln,
mit einem Gehäuse,
mit einem von Seitenwänden sowie einer Bodenwand und einer Deckenwand begrenzten Garraum,
mit einem Gebläse für die Erzeugung eines Heißluftstroms in dem Garraum,
mit einem in den Garraum einführbaren drehbaren Korb für die Lebensmittel, wobei der Korb um eine Drehachse drehbar ist und im Betrieb von dem Heißluftstrom durchsetzt wird,
wobei der Korb zumindest abschnittsweise entlang seinem Umfang eine aus Blech gefertigte und mit Öffnungen (2) versehene Wandung (1) aufweist,
**dadurch gekennzeichnet, daß**
der Korb in einem Querschnitt senkrecht zu der Drehachse im wesentlichen quadratisch geformt ist, daß die Eckbereiche (5) der Wandung (1) abgeflacht oder abgerundet sind und daß die abgeflachten oder abgerundeten Eckbereiche (5) Führungsbereiche für eine Korbführung aufweisen, die nicht von Öffnungen (2) durchsetzt sind.

2. Heißluftofen nach Anspruch 1, **dadurch gekennzeichnet, daß** die Öffnungen (2) länglich ausgebildet sind.

3. Heißluftofen nach einem der vorhergehenden Ansprüche, **dadurch gekennzeichnet, daß** die Öffnungen (2) im wesentlichen in Umfangsrichtung des Korbes ausgerichtet sind.

4. Heißluftofen nach einem der vorhergehenden Ansprüche, **dadurch gekennzeichnet, daß** der Korb einseitig offen ist.

5. Heißluftofen nach einem der vorhergehenden Ansprüche, **dadurch gekennzeichnet, daß** die Wandung (1) des Korbes entlang seines Umfangs einstückig gefertigt ist.

6. Heißluftofen nach einem der vorhergehenden Ansprüche, **dadurch gekennzeichnet, daß** die Wandung (1) des Korbes zumindest an der Korbinnenseite mit einer haftvermindernden Beschichtung versehen ist.

## Claims

1. Hot-air oven for the preparation of foodstuffs,
with a housing,
with a cooking chamber defined by lateral walls as well as a base wall and a cover wall,
with a fan for generating a hot air flow in the cooking chamber,
with a rotatable basket for the food, which can be introduced into the cooking chamber, the basket being rotatable about an axis of rotation and being penetrated by the hot air flow during operation,
the basket comprising wailing (1) at least in sections along its circumference which is manufactured from sheet metal and is provided with openings (2)
characterised in that
the basket is substantially square in a cross section perpendicular to the axis of rotation, the corner regions (5) of the wailing (1) are flattened or rounded, and the flattened or rounded corner regions (5) comprise guide regions for basket guidance which are not penetrated by openings (2).

2. Hot-air oven according to claim 1, characterised in that the openings (2) are elongate.

3. Hot-air oven according to one of the preceding claims, characterised in that the openings (2) are essentially aligned in the circumferential direction of the basket.

4. Hot-air oven according to one of the preceding claims, characterised in that the basket is open on one side.

5. Hot-air oven according to one of the preceding claims, characterised in that the walling (1) of the basket is integrally formed along its circumference.

6. Hot-air oven according to one of the preceding claims, characterised in that the walling (1) of the basket is provided with a non-stick coating at least on the inner side of the basket.

## Revendications

1. Four à air chaud pour la préparation de produit alimentaires, comprenant:
un boîtier,
une chambre de cuisson délimitée par des parois latérales, ainsi que par une paroi de fond et une paroi de couverture,
un ventilateur pour produire un courant d'air chaud dans la chambre le cuisson,
une corbeille rotative, susceptible d'être introduite dans la chambre de cuisson, pour les produits alimentaires, ladite corbeille étant rotative autour d'un axe de rotation et traversée en fonctionnement par le courant d'air chaud,
ladite corbeille étant réalisée au moins par secteurs le long de sa périphérie à partir d'une tôle, et présente une paroi (1) pourvue d'ouvertures (2),
caractérisé en ce que
la corbeille est formée perpendiculairement à l'axe de rotation avec une section sensiblement carrée, en ce que les zones de coin (5) de la paroi (1) sont aplaties ou arrondies, et en ce que les zones de coin aplaties ou arrondies (5) présentent des régions de guidage pour un guide de corbeille, qui ne sont pas traversées par des ouvertures (2).

2. Four à air chaud selon la revendication 1, caractérisé en ce que les ouvertures (2) sont réalisées sous forme oblongue.

3. Four a air chaud selon l'une des revendications précédentes, caractérisé en ce que les ouvertures (2) sont dirigées sensiblement en direction périphérique de la corbeille.

4. Four à air chaud selon l'une des revendications précédentes, caractérisé en ce que la corbeille est ouverte d'une côté.

5. Four à air chaud selon l'une des revendications précédentes, caractérisé en ce que la paroi (1) de la corbeille est réalisée d'une seule pièce le long de sa périphérie.

6. Four à air chaud selon l'une des revendications précédentes, caractériseé en ce que la paroi (1) de la corbeille est pourvue d'un revêtement réduisant l'adhérence, ou moins sur la face intérieure de la corbeille.
